# FASCICULE DE BREVET EUROPEEN

(11) **EP 3 847 475 B1**
(45) Date de publication et mention de la délivrance du brevet: **24.06.2026**
(21) Numéro de dépôt: 19786373.1
(22) Date de dépôt: 06.09.2019
(51) Int. Cl.: G01S 13/00, G01S 7/02, G01S 7/282, G01S 7/292, G01S 7/00

(54) **PROCÉDÉ ET DISPOSITIF DE GÉNÉRATION D'UN SIGNAL RADAR, PROCÉDÉ ET SYSTÈME DE DÉTECTION RADAR ASSOCIES**
VERFAHREN UND VORRICHTUNG ZUR ERZEUGUNG EINES RADARSIGNALS, ZUGEHÖRIGES VERFAHREN UND SYSTEM ZUR RADARDETEKTION
METHOD AND DEVICE FOR GENERATING A RADAR SIGNAL, ASSOCIATED RADAR DETECTION METHOD AND SYSTEM

(30) Priorité: 07.09.2018 FR 1858055
(43) Date de publication de la demande: 14.07.2021
(73) Titulaire: TDF, 92120 Montrouge (FR)
(72) Inventeur: KASSER, Pierre, 57580 BEUX (FR)
(74) Mandataire: Gevers & Orès
(86) Numéro de dépôt international: PCT/FR2019/052049
(87) Numéro de publication internationale: WO 2020/049260

(56) Documents cités:
- US-A1- 2014 035 774
- US-A1- 2017 310 758
- BOK DOMINIK: "Reconstruction and Reciprocal Filter of OFDM Waveforms for DVB-T2 Based Passive Radar", 2018 INTERNATIONAL CONFERENCE ON RADAR (RADAR), IEEE, 27 August 2018 (2018-08-27), pages 1 - 6, XP033466140, DOI: 10.1109/RADAR.2018.8557339
- ZHIWEN GAO ET AL: "DVB-T Signal Cross-Ambiguity Functions Improvement for Passive Radar", RADAR 2006 : PROCEEDINGS OF 2006 CIE INTERNATIONAL CONFERENCE ON RADAR ; OCT. 16 - 19, 2006, SHANGHAI, CHINA, IEEE OPERATIONS CENTER, PISCATAWAY, NJ, 1 October 2006 (2006-10-01), pages 1 - 4, XP031073317, ISBN: 978-0-7803-9582-4

## Description

### 1. Domaine technique de l'invention

L'invention concerne les procédés et systèmes de détection radar. En particulier, l'invention concerne les procédés et systèmes de détection radar multistatiques.

### 2. Arrière-plan technologique

Un système de détection radar permet la détection d'objets dans une zone à surveiller, par l'utilisation d'ondes électromagnétiques envoyées par un émetteur dans la zone. Les ondes électromagnétiques qui rentrent en contact avec un objet dans la zone à surveiller sont réfléchies par cet objet, et cette réflexion est captée par un récepteur. Le traitement des données reçues par le récepteur peut permettre la détermination de caractéristiques de l'objet, comme sa position, sa vitesse, sa nature, etc. Les objets détectés sont par exemple des objets volants, comme des aéronefs, ou naviguant, comme des bateaux.

Les systèmes radar actuels sont classés dans différentes catégories de part les éléments qui les composent : par exemple, un système radar est qualifié de monostatique si l'émetteur du système radar et le récepteur du système radar sont raccordés à la même antenne, et donc au même emplacement. Au contraire, un système radar est qualifié de multistatique si le ou les émetteurs sont raccordés à une antenne différente et généralement à un emplacement différent de l'antenne du récepteur.

Parmi les systèmes radar multistatiques, deux technologies sont généralement employées : les systèmes radar actifs et les systèmes radar passifs.

Un système radar multistatique actif utilise un ou plusieurs émetteurs dits coopératifs, qui émettent en direction de la zone à surveiller un signal radar particulier, destiné à être capté par un récepteur après réflexion sur l'objet à détecter. Les radars multistatiques actifs permettent notamment une bonne détection radar dans la zone de surveillance grâce à l'utilisation du signal radar particulier, tout en permettant une discrétion accrue du récepteur car l'emplacement de celui-ci n'est pas détectable car il n'émet pas d'ondes. En contrepartie, les émetteurs ne présentent pas cette discrétion et la mise en place du système est complexe et coûteuse, car elle nécessite la mise en place d'une infrastructure complète dédiée à l'émission et à la détection radar.

Un système radar multistatique passif utilise un ou plusieurs émetteurs dits noncoopératifs, qui émettent dans une multitude de directions un signal n'étant pas à l'origine destiné à une application de détection radar, par exemple un signal de radiodiffusion ou de téléphonie mobile. Le récepteur capte ces signaux ainsi que les réflexions de ces signaux par l'objet à détecter, et un traitement permet de les différencier. Les radars multistatiques passifs permettent une discrétion renforcée car la seule installation dédiée au radar est le récepteur, qui n'émet pas d'ondes. En contrepartie, l'absence de contrôle du signal émis entraîne une perte de précision importante par rapport aux radars actifs, et les signaux reçus demandent un traitement important pour être exploitables.

Les deux technologies se différencient donc principalement par les signaux qu'ils génèrent et transmettent en direction de la zone à surveiller : le système actif utilise un signal radar conçu pour la détection radar, qui est performant mais qui rend le système détectable, et le système passif utilise un signal non dédié au radar, qui rend le système indétectable mais qui est moins performant. L'Homme du métier est donc amené à effectuer un choix entre ces deux types de signaux selon qu'il souhaite une technologie performante ou non-détectable.

US 2014/035774 A1 concerne un détecteur radar actif pour véhicule motorisé capable d'émettre des signaux radar et des messages de communication destinés à d'autres véhicules. Les signaux radar et les messages de communication sont émis séparément via une même antenne d'émission et alternativement par commutation d'un interrupteur.

US2017/310758 A1 concerne un détecteur radar actif véhicule proposant une méthode de modulation d'un signal radar par des données à transmettre consistant à moduler la phase du signal radar selon un ou plusieurs codes de type « spreading codes » correspondant à des bits d'information. Sur réception de signaux radars encodés par d'autres véhicules, le détecteur peut récupérer l'information encodée en connaissant la base de codes utilisés.

### 3. Objectifs de l'invention

L'invention vise à pallier au moins certains des inconvénients des signaux radars connus utilisés dans les systèmes et procédés de détection.

En particulier, l'invention vise aussi à fournir, dans au moins un mode de réalisation de l'invention, un procédé de génération d'un signal radar permettant une détection plus performante.

L'invention vise aussi à fournir, dans au moins un mode de réalisation, un procédé de génération d'un signal radar garantissant un système et un procédé de détection radar discrets.

L'invention vise aussi à fournir, dans au moins un mode de réalisation, un procédé de génération d'un signal radar pouvant être utilisé grâce à des aménagements simples et peu couteux d'une infrastructure préexistante.

L'invention vise aussi à fournir, dans au moins un mode de réalisation, un procédé de génération d'un signal radar permettant d'accroître la portée du signal radar émis tout en améliorant la résolution de détection (dite « *range resolution* » en anglais).

### 4. Exposé de l'invention

Pour ce faire, l'invention concerne un procédé de génération d'un signal radar selon la revendication 1.

Un procédé de génération selon l'invention permet donc de générer un signal radar en intégrant une ou plusieurs impulsions radars dans des trames non allouées d'au moins un signal de communication, permettant ainsi de combiner les avantages des radars multistatiques actifs et passifs : ledit au moins un signal de communication utilisé est adapté pour contenir des informations de communication, par exemple de radiocommunication. Ledit au moins un signal de communication comprend des trames non-allouées à la communication, qui ne sont donc pas utilisées à des fins de communications et ne sont pas prises en compte par des équipements de réception adaptés pour recevoir le signal de communication. Une ou plusieurs trames non-allouées sont alors utilisées pour insérer une ou plusieurs impulsions radar. Ces impulsions radars permettent l'obtention d'un signal radar plus performant qu'un signal envoyé par un radar passif, puisqu'elles sont spécifiquement adaptées à une utilisation radar.

De plus, les impulsions radars sont difficilement détectables par un système extérieur, qui va reconnaître l'ensemble du signal de communication sans distinguer facilement l'impulsion radar insérée.

L'utilisation d'un signal de communication permet en outre l'utilisation d'infrastructures de communication préexistantes pour l'émission du signal radar ainsi obtenu, et ainsi ne nécessite pas la mise en place d'une infrastructure dédiée coûteuse et complexe à installer.

Avantageusement et selon l'invention, ladite instruction d'émission d'une impulsion radar comprend une ou plusieurs des caractéristiques de l'impulsion radar suivantes :
- forme d'onde de l'impulsion radar,
- occurrence et périodicité de l'impulsion radar,
- durée de l'impulsion radar,
- puissance de l'impulsion radar,
- durée d'un silence suivant l'impulsion radar.

Selon cet aspect de l'invention, l'instruction permet en outre de régler une multitude de paramètres que devra respecter le procédé de génération du signal radar : ainsi, il est possible d'adapter par exemple la puissance, la forme, l'occurrence et la durée de l'impulsion radar selon les besoins dans le cadre d'une détection radar. La fixation des caractéristiques de l'impulsion radar permet en outre une meilleure détection de celle-ci et facilite la distinction entre les trames radars et les trames allouées à la communication.

Avantageusement et selon l'invention, le procédé de génération d'un signal radar comprend une étape d'ajout d'un en-tête dans au moins une trame radar dudit au moins un signal radar, ledit en-tête comprenant une information sur la nature de l'impulsion radar.

Selon cet aspect de l'invention, l'en-tête permet notamment d'avertir les éventuels équipements de réception destinés à exploiter les trames allouées à la communication du signal de communication que les trames radar ne sont pas allouées à la communication, et qu'il ne faut donc pas tenir compte des données s'y trouvant, en l'occurrence l'impulsion radar. Cela permet de s'assurer que l'insertion des impulsions radars n'a pas d'impact sur les communications effectuées via le signal de communication.

Avantageusement et selon l'invention, ledit au moins signal de communication acquis à ladite étape d'acquisition est un signal utilisant le protocole de communication selon le standard DVB-T2, par exemple conformément à la norme ETSI EN 302 755 V1.2.1, et les trames non allouées du dudit au moins un signal de communication sont des trames de type *Future Extension Frame* (FEF) définies dans ledit standard.

Selon cet aspect de l'invention, les trames *Future Extension Frame* sont des trames prévues dans le standard de radiodiffusion DVB-T2 pour faire l'objet d'utilisations futures liées à, par exemple, une amélioration ou une extension du standard initialement prévu, par exemple, à des fins de communication mobile. En l'occurrence, le procédé selon l'invention profite de ces trames vides pour insérer une impulsion radar, qui n'a pas de lien avec la radiodiffusion, détournant ainsi ces trames de leur objectif initial sans autre conséquences pour le service de communication initial.

De manière alternative, le standard de communication considéré est le standard américain ATSC (*Advanced Television Systems Committee*). Dans ce cas, ledit au moins signal de communication acquis à l'étape d'acquisition du procédé selon l'invention est un signal utilisant le protocole de communication selon le standard ATSC, notamment selon la version 3.0. Les trames non allouées dudit au moins un signal de communication sont des trames similaires aux trames FEF (*Future Extension Frame*) du protocole DVB-T2. On notera que le protocole ATSC 3.0 reprend les bases de la couche physique du protocole DVB-T2.

Selon une autre caractéristique de l'invention, l'impulsion radar est insérée pour un signal de communication donné à un instant Tn=T0+n.ΔT où ΔT désigne un intervalle de temps de référence et T0 désigne un temps de référence commun à ladite pluralité de signaux.

Selon une autre caractéristique de l'invention, l'intervalle de temps de référence ΔT est nul.

L'invention concerne également un procédé de détection radar, caractérisé en ce qu'il comprend :
- une étape de génération d'un signal radar suivant le procédé de génération selon l'invention,
- une étape d'émission dudit signal radar généré,
- une étape de réception du signal radar émis,
- une étape d'extraction de l'impulsion radar du signal radar reçu.

Le signal radar reçu lors de l'étape de réception du signal radar émis est soit directement le signal radar émis, soit le signal radar émis puis réfléchi par un éventuel objet se trouvant dans une zone à surveiller, dans laquelle une détection radar est mise en place par le procédé de détection radar.

L'invention concerne également un dispositif de génération d'un signal radar selon la revendication 9.

Avantageusement, le procédé de génération d'un signal radar selon l'invention est mis en œuvre par le dispositif de génération d'un signal radar selon l'invention.

Avantageusement, le dispositif de génération d'un signal radar selon l'invention met en œuvre le procédé de génération d'un signal radar selon l'invention.

L'invention concerne également un système de détection radar, caractérisé en ce qu'il comprend
- au moins un dispositif de génération d'un signal radar selon l'invention,
- au moins un émetteur adapté pour émettre ledit signal radar généré par un dispositif de génération d'un signal radar,
- au moins un récepteur adapté pour recevoir ledit signal radar émis par un émetteur,
- des moyens d'extraction de l'impulsion radar du signal radar reçu par un récepteur.

Avantageusement, le procédé de détection radar selon l'invention est mis en œuvre par le système de détection radar selon l'invention.

Avantageusement, le système de détection radar met en œuvre le procédé de détection radar.

Selon un mode de réalisation particulier, le système de détection radar selon l'invention comprend en outre des moyens de démultiplexage pour démultiplexer ledit signal radar reçu en sortie dudit au moins un récepteur, en une pluralité de signaux de communication desquels est extraite l'impulsion radar par lesdits moyens d'extraction.

L'invention concerne également un procédé de génération d'un signal radar, un procédé de détection radar, un dispositif de génération d'un signal radar et un système de détection radar, caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la **figure 1** est une vue schématique des trames d'un signal de communication acquis selon un mode de réalisation de l'invention,
- la **figure 2a** représente un procédé de génération d'un signal radar selon un mode de réalisation de l'invention,
- la **figure 2b** représente un dispositif de génération d'un signal radar selon un mode de réalisation de l'invention,
- la **figure 3** est une vue schématique d'un signal radar selon un mode de réalisation de l'invention,
- la **figure 4** représente un procédé de détection radar selon un mode de réalisation de l'invention,
- la **figure 5** représente un dispositif de détection radar selon un mode de réalisation de l'invention,
- La **figure 6** représente un dispositif de génération d'un signal radar selon un mode de réalisation de l'invention utilisant le standard DVB-T2,
- la **figure 7** illustre schématiquement l'insertion d'une impulsion radar dans un ensemble de signaux de communication destinés à être multiplexés avant émission.

### 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

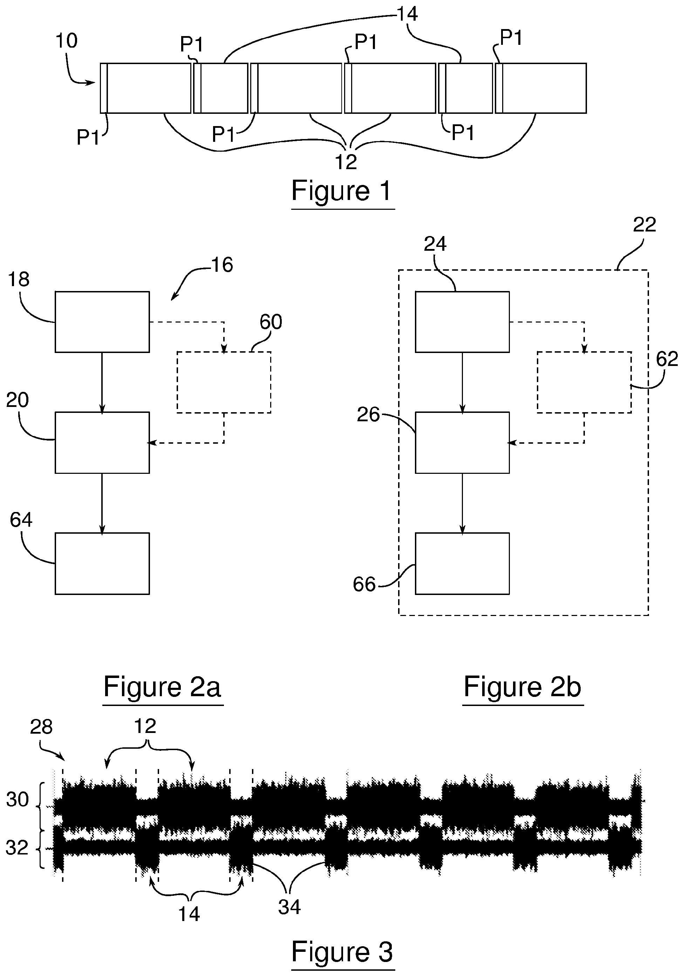

La **figure 1** représente schématiquement un signal 10 de communication comprenant des trames 12 allouées à la communication et des trames 14 non allouées à la communication. En l'occurrence, le signal 10 de communication représenté est un signal selon le standard DVB-T2. Les trames 12 allouées à la communication sont appelées selon ledit standard « trames T2 », tandis que les trames 14 non allouées à la communication sont, par exemple, les trames de type « *Future Extension Frame* » (en abrégé FEF) définies dans ledit standard. Ces trames 14 FEF sont présentes dans le standard pour anticiper les évolutions de celui-ci, en proposant des trames vides qui pourront être utilisées dans une éventuelle extension du standard. Les symboles P1 précédant chaque trame permettent de distinguer la nature des trames T2 et FEF ainsi que leur paramétrage.

L'invention consiste en un procédé 16 de génération d'un signal radar utilisant les trames non-allouées à la communication d'un signal de communication, par exemple les trames 14 FEF du signal 10 de communication de type DVB-T2, pour y insérer des impulsions radar. Comme représenté à la **figure 2a****,** le procédé 16 de génération du signal radar comprend une étape 18 d'acquisition du signal 10 de communication comprenant les trames 12 allouées à la communication et les trames 14 non allouées à la communication, tel que le signal DVB-T2 représenté à la figure 1, et une étape 20 d'insertion d'une impulsion radar dans au moins une trame 14 non allouée du signal de communication, dite trame radar, pour former ledit signal radar. La trame radar désigne donc une trame 14 non allouée, dans laquelle une impulsion radar a été insérée.

Le procédé 16 de génération d'un signal radar est avantageusement mis en œuvre par un dispositif 22 de génération du signal radar, représenté **figure 2b****,** comprenant des moyens 24 d'acquisition du signal 10 de communication comprenant les trames 12 allouées à la communication et les trames 14 non allouées à la communication, et des moyens 26 d'insertion d'une impulsion radar dans au moins une trame 14 non allouée du signal de communication, dite trame radar, pour former ledit signal radar. Les moyens 24 d'acquisition et les moyens 26 d'insertion du dispositif de génération d'un signal radar sont, par exemple, des modules embarqués dans un calculateur, un ordinateur ou plus particulièrement un modulateur DVB-T2 qui peut être alloué à d'autres tâches, notamment le traitement du signal de communication avant son acquisition et le traitement du signal radar une fois celui-ci généré. Les modules peuvent être présents dans le calculateur, l'ordinateur ou le modulateur DVB-T2 sous forme matérielle ou logicielle ou une combinaison de moyens logiciels et matériels.

Un exemple d'un signal radar résultant du procédé de génération du signal radar est représenté à la **figure 3****.** Le signal 28 radar est représenté séparé en deux parties pour une meilleure visibilité, une partie 30 communication du signal 28 radar et une partie 32 purement radar du signal 28 radar. Dans la partie 30 communication du signal 28 radar, la différence entre les trames 12 allouées à la communication et les trames 14 non allouées à la communication est facilement visible : durant les trames 12 allouées du signal de communication, on observe une modulation de la partie 30 communication du signal 28 radar permettant la transmission d'informations. Durant les trames 14 non-allouées à la communication, la partie 30 communication du signal 28 radar est de valeur minimale, constante et n'est pas modulée : elle ne contient pas d'informations de communication. Le procédé 16 de génération du signal radar décrit à la figure 2a permet ainsi d'insérer une information supplémentaire dans ces trames 14 non-allouées à la communication, l'information supplémentaire étant ici les impulsions 34 radars, représentées dans la partie 32 purement radar du signal 28 radar. Au contraire de la partie 30 communication du signal 28 radar, la partie 32 purement radar du signal 28 radar ne comprend de signal modulé porteur d'information, c'est-à-dire les impulsions 34 radar, que dans les trames 14 non-allouées du signal. Comme visible sur la figure 3, ces impulsions 34 radar de la partie 32 purement radar du signal 28 radar ont une durée généralement plus courte que les trames 12 allouées à la communication.

En pratique, la partie 30 communication du signal et la partie 32 purement radar du signal 28 radar sont regroupées et ne sont éventuellement dissociées qu'à la suite d'un traitement du signal 28 radar, par exemple lors d'une réception du signal 28 radar.

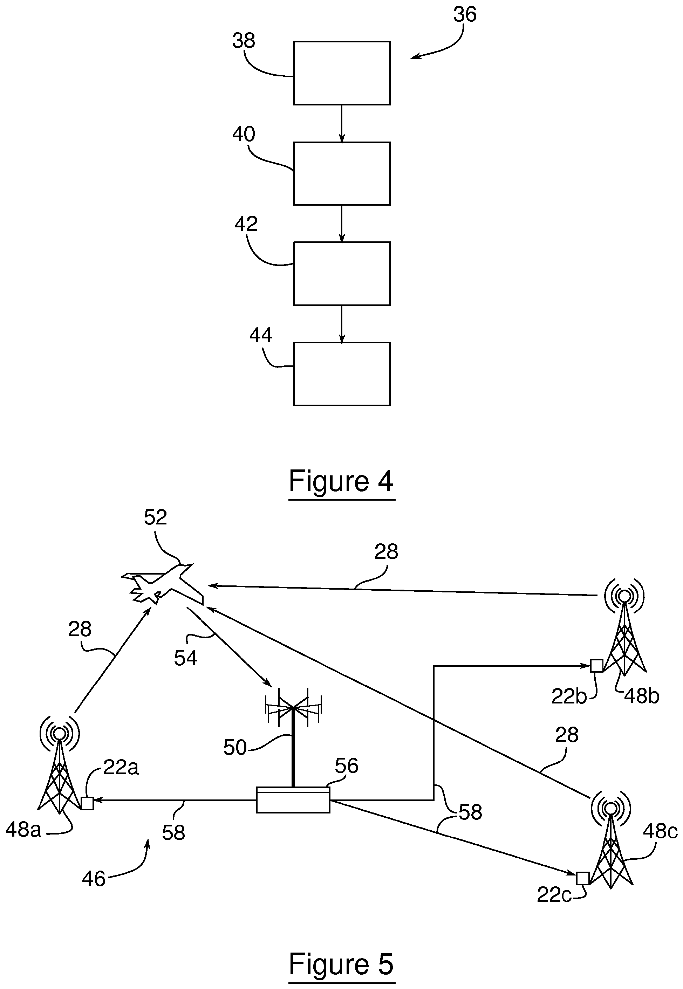

La **figure 4** représente un procédé 36 de détection radar, permettant par exemple la surveillance d'une zone et la détection des objets pouvant y circuler, ainsi que la détection de caractéristiques de ces objets, tels que leur position, leur vitesse, leur nature, etc.

Le procédé 36 de détection radar comprend :
- une étape 38 de génération du signal radar selon le procédé 16 de génération de signal selon l'invention décrit précédemment en référence à la figure 2a,
- une étape 40 d'émission du signal radar, par exemple grâce à un ou plusieurs émetteurs,
- une étape 42 de réception du signal radar, par exemple par un récepteur,
- une étape 44 d'extraction de l'impulsion radar du signal radar.

Le procédé 36 de détection radar est, par exemple, mis en œuvre par un système 46 de détection radar tel que représenté à la **figure 5****.**

Le système 46 de détection radar est un système radar multistatique, comprenant au moins un émetteur, ici trois émetteurs 48a, 48b, 48c, qui sont placés sur des antennes et à des emplacements différents entre eux et différents par rapport à un récepteur 50. Le système 46 de détection radar comprend aussi au moins un dispositif 22 de génération d'un signal radar mettant en œuvre le procédé 16 de génération d'un signal radar selon l'invention. En l'occurrence, chaque émetteur 48a, 48b, 48c comprend un dispositif 22a, 22b, 22c de génération d'un signal radar et est adapté pour émettre le signal 28 radar généré par son dispositif 22a, 22b, 22c de génération d'un signal radar lors de l'étape de génération du signal radar du procédé de détection radar. Dans un autre mode de réalisation non représenté, le signal radar peut être généré par un seul dispositif de génération de signal radar puis transmis à l'ensemble des émetteurs pour être émis.

Le signal 28 radar émis par les émetteurs, lors de l'étape d'émission du signal radar du procédé de détection radar, dans la zone à surveiller permet la détection d'un objet, ici un aéronef 52, traversant cette zone par la réflexion du signal 28 radar sur l'aéronef 52 et la réception par le récepteur 50 d'un signal 54 radar réfléchi. Le récepteur 50 reçoit aussi généralement directement le signal 28 radar émis par un des émetteurs 48a, 48b, 48c.

Des moyens 56 d'extraction de l'impulsion radar du signal radar permettent le traitement de l'impulsion radar du signal 54 radar réfléchi afin de déterminer la présence d'un objet et éventuellement sa position, sa vitesse, la direction de son déplacement, sa nature, etc.

Pour améliorer les performances de la détection radar, le récepteur 50 doit être en mesure d'isoler facilement l'impulsion radar du signal radar. Les impulsions radar peuvent être ainsi contrôlées par le récepteur 50, par exemple en générant une instruction 58 d'émission d'impulsion radar et en transmettant cette instruction 58 d'émission d'impulsion radar à chaque émetteur 48a, 48b, 48c. Cette instruction 58 d'émission d'impulsion radar permet de contrôler plusieurs paramètres ou caractéristiques de l'impulsion radar, notamment :
- la forme d'onde de l'impulsion radar,
- l'occurrence et la périodicité de l'impulsion radar,
- la durée de l'impulsion radar,
- la durée de silence suivant l'impulsion permettant de prendre en compte l'écho réfléchi par la cible,
- etc.

Ces caractéristiques, notamment la forme d'onde et la durée de l'impulsion radar permettent la génération d'un signal 28 radar dont l'impulsion radar est adaptée dans la trame pour perturber au minimum le signal de communication d'origine dans lequel ladite impulsion est insérée, et notamment le débit utile dudit signal de communication d'origine.

En outre, le dispositif 22 de génération du signal peut être configuré pour ne pas insérer d'impulsion radar dans le signal de communication, si celui-ci n'obtient pas d'instruction 58 d'émission d'impulsion radar, par exemple, si aucune surveillance de la zone à surveiller n'est en cours. Cela permet de ne pas modifier le signal de communication si aucune détection radar n'est nécessaire. En référence à la figure 2a, une étape 60 d'obtention d'une instruction d'émission d'impulsion radar permet la prise en compte de l'instruction dans le procédé de génération du signal radar. En référence à la figure 2b, cette étape d'obtention est mise en œuvre par des moyens 62 d'obtention d'une instruction d'émission d'impulsion radar.

La modification du signal de communication peut aussi être obtenue par l'envoi de l'instruction 58 en utilisant les caractéristiques d'occurrence et de périodicité, en utilisant un nombre limité de trames non allouées, par exemple une trame sur deux, si l'utilisation de chaque trame non allouée n'est pas nécessaire.

Les émetteurs 48a, 48b, 48c utilisés dans le système 46 de détection radar sont à l'origine des émetteurs prévus pour transmettre des signaux de communication à des équipements de réception de signaux de communication (non représentés). En l'occurrence, les émetteurs 48a, 48b, 48c sont prévus à l'origine pour la transmission du signal 10 de communication, acquis lors de l'étape 18 d'acquisition du procédé 16 de génération du signal radar, en direction des équipements de réception. Ainsi, dans le cadre du procédé 16 de détection radar, il est nécessaire que cette transmission soit effectuée sans apporter de perturbations du point de vue des équipements de réception, autrement dit que le procédé 16 de génération d'un signal radar effectue une modification du signal 10 de communication pour former le signal 28 radar qui soit transparente pour les équipements de réception.

Pour ce faire, la ou les trames 14 non allouées dans lesquelles ont été insérées une impulsion radar, dites trames radars, comprennent un en-tête (autrement appelé préambule) comprenant une information sur la nature du signal qui suit immédiatement, en l'occurrence l'impulsion radar, et notamment indiquant aux équipements récepteur de ne pas prendre en compte lesdites trames radar car elles ne contiennent pas d'informations de communication, lesdites informations étant seulement présentes dans les trames 12 allouées à la communication. Cet en-tête présent à chaque début de trame radar est soit présent dès le départ si le protocole ou standard le prévoit, soit est ajouté lors d'une étape 64 d'ajout d'un en-tête dans la trame radar du procédé de génération d'un signal radar, comme représenté en référence avec la figure 2a. Selon un autre mode de réalisation, cette étape d'ajout peut être effectuée avant l'étape 20 d'insertion de l'impulsion radar. Cette étape d'ajout est mise en œuvre, par exemple, par des moyens 66 d'ajout d'un en-tête du dispositif 22 de génération de signal, comme représenté en référence avec la figure 2b. Par exemple, dans le standard DVB-T2 décrit dans le document de norme ETSI EN 302 755 V1.2.1, les trames FEF sont indiquées dans l'en-tête de type P1, commun à tous les types de trames, mais dont la valeur permet de différencier les trames allouées des trames FEF. Ces en-têtes P1 sont, par exemple, représentés en référence avec la figure 1. Un équipement récepteur lisant un en-tête indiquant la présence d'une trame FEF ne va donc pas considérer la trame FEF qui suit l'en-tête. En pratique, une trame P1 selon le standard DVB-T2 comprend deux mots, un premier mot S1 de trois bits et un deuxième mot S2 de quatre bits. Dans ce mode de réalisation, l'en-tête P1 indique une trame FEF ne devant pas être lu par un équipement récepteur quand le premier mot S1 comprend la valeur « 010 » indiquant la présence de trames non-T2, et le deuxième mot S2 comprend la valeur « 0001 » indiquant que l'en-tête P1 est un en-tête de trame FEF et que le signal comprend d'autres types d'en-têtes P1, notamment les en-têtes des trames T2 allouées à la communication. Un autre type d'en-tête, dit en-tête P2, est présent uniquement dans les trames T2 allouées à la communication. Il comprend néanmoins des informations concernant les trames FEF non allouées à la communication, notamment par le biais d'un mot L1 comprenant des variables indiquant le type de trame FEF (FEF_TYPE), l'intervalle d'occurrence entre deux trames FEF (FEF_INTERVAL), et la longueur des trames FEF (FEF_LENGTH). Plus précisément, l'intervalle d'occurrence entre deux trames est défini par le nombre de trame T2 entre deux trames FEF.

Selon un mode de réalisation de l'invention, si le signal de communication utilisé est un signal selon le standard DVB-T2, il peut être configuré de sorte à ce que son débit soit de 33,1 Mbps (mégabits par seconde), et que la durée d'une trame allouée à la communication soit de 243,9 ms. Pour perturber au minimum le débit du signal de communication, les trames non allouées à la communication ont, par exemple, une durée de l'ordre de 1,1 ms. Les trames non allouées à la communication entraînent donc une baisse de débit de 33,1*1,1/243,9 = 150 kbps (kilobits par seconde) par rapport à un signal de communication comprenant uniquement des trames allouées à la communication, ce qui représente environ 0,5% de perte, soit une perte négligeable.

L'en-tête P1 durant 224 µs, le temps restant dans les trames non allouées à la communication pour insérer l'impulsion radar est de 876 µs. L'impulsion radar est généralement suivie d'un silence, durant lequel une réception de l'impulsion radar est possible après réflexion de ladite impulsion radar sur l'objet dans la zone de surveillance. Pour une impulsion radar d'une durée de quelques microsecondes, par exemple 10 µs, la durée du silence est de 876-10 = 866 µs, ce qui permet donc à l'impulsion de parcourir c*866*10⁻⁶= 260 km, avec c désignant la vitesse de propagation du signal radar, environ égale à 300 000 km/s, soit une portée de détection radar de 260/2 = 130 km.

Selon un mode de réalisation de l'invention, les émetteurs 48a, 48b, 48c du système de détection font partie d'un réseau dit iso-fréquence (en anglais *Single Frequency Network* ou SFN), c'est-à-dire que les émetteurs 48a, 48b, 48c émettent tous les signaux à la même fréquence et selon un timing synchronisé. Selon un autre mode de réalisation de l'invention, un site peut émettre sur plusieurs émetteurs, plusieurs signaux radars avec différentes fréquences, permettant ainsi une émission dite pseudo large-bande, l'impulsion radar étant émise dans le créneau du signal radar N fois de manière synchrone, avec N le nombre de fréquences différentes utilisées sur un site donné. Ce mode de réalisation permet une sommation en phase et amplitude des impulsions individuelles pour une puissance instantanée élevée et offre une meilleure diversité de fréquence et une meilleure résolution séparatrice d'échos. La mise en œuvre de ce mode nécessite une synchronisation parfaite des temps d'émission des trames FEF de chaque signal initial.

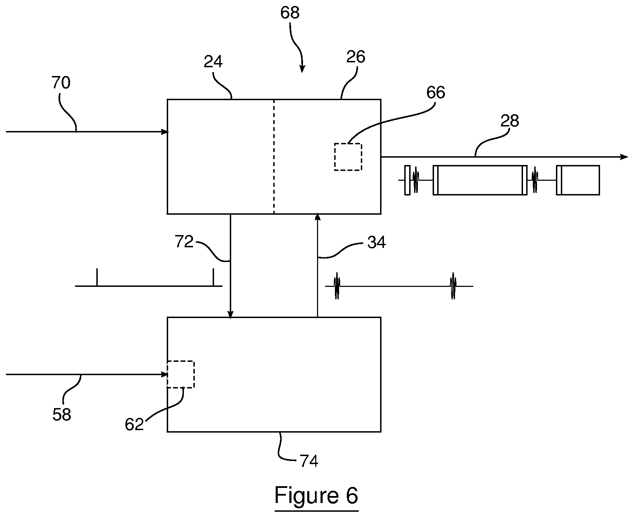

La **figure 6** représente un dispositif de génération d'un signal radar selon un mode de réalisation de l'invention utilisant le standard DVB-T2. Les moyens 24 d'acquisition et les moyens 26 d'insertion sont embarqués dans un modulateur 68 DVB-T2. Le modulateur 68 DVB-T2 réceptionne le signal de communication, sous la forme d'un flux 70 dit flux T2-MI, comprenant les données de communication à transmettre pour la communication avec les équipements de réception du signal de communication. Le modulateur 68 DVB-T2, une fois le signal réceptionné, transmet un signal 72 de synchronisation indiquant à un générateur 74 d'impulsion radar à quel moment les impulsions radar peuvent être générées afin d'être insérées dans les trames non allouées à la communication. Le générateur 74 d'impulsion radar comprend les moyens 62 d'obtention d'une instruction 58 d'émission d'impulsion radar, ladite instruction 58 provenant par exemple, comme décrit en référence à la figure 5, du récepteur 50. Le générateur 74 d'impulsion radar génère une impulsion 34 radar en prenant en compte les caractéristiques d'impulsion radar contenues dans l'instruction 58, synchronise les impulsions 34 radar conformément au signal 72 de synchronisation reçu, et transmet les impulsions 34 radar au modulateur 68 DVB-T2. Les moyens 26 d'insertion insèrent l'impulsion radar dans les trames non allouées à la communication du signal de communication pour former ledit signal 28 radar. Des moyens 66 d'ajout d'en-tête ajoutent au signal 28 radar les en-têtes adaptés, comme décrit précédemment. Le signal 28 radar est ensuite transmis, par exemple, à un amplificateur (non représenté) de façon à être émis par les émetteurs 48a, 48b, 48c.

L'invention ne se limite pas aux seuls modes de réalisation décrits. En particulier, d'autres types de signaux de communications autres que le DVB-T2, tels que ATSC 3.0 sont utilisables, du moment qu'ils présentent la possibilité d'utiliser une trame non-allouée à la communication, soit parce qu'elle n'est jamais allouée, soit parce qu'il est possible de modifier son allocation sans mettre en cause la communication d'origine : plus particulièrement, toute trame non-allouée peut être utilisée si un équipement de réception du signal de communication auquel le signal de communication est destiné détecte que la trame radar ne lui est pas destinée et ne la prend pas en compte.

Selon un mode de réalisation particulier, des signaux de communication conformes au standard ATSC, en particulier selon la version 3.0 sortie en octobre 2017, sont utilisés. Dans ce cas, les trames non allouées à la communication du signal de communication sont des trames similaires aux trames FEF (*Future Extension Frame* en anglais) du protocole DVB-T2.

Le choix des signaux de communication utilisés et donc des émetteurs associés est effectué en fonction de différent paramètres, par exemple, la couverture de la zone à surveiller : dans ce cas, les émetteurs de signaux de communication couvrant au maximum la zone à surveiller sont privilégiés, ces signaux étant, par exemple, des signaux de radiodiffusion de type radiophonique ou télévisuel, ou bien des signaux des réseaux de téléphonie mobiles, ces exemples de signaux étant déjà fortement développés et couvrant de larges zones.

Pour augmenter la puissance du signal radar tout en améliorant sa résolution de détection (ou « *range resolution* » en anglais), les inventeurs proposent de tirer profit du multiplexage des signaux de communication, tels que ceux émis dans le cadre du service de diffusion de la *Télévision Terrestre Numérique* (TNT), par exemple selon la norme DVB-T.

De manière connue, chaque signal vidéo numérique d'une chaîne de télévision est fournie à un opérateur de multiplex qui se charge d'assembler les flux compressés de plusieurs chaînes dans un même canal correspondant à une gamme de fréquences pour former un multiplex, conforme par exemple à la norme DVB-T2. Actuellement en France, on compte six "multiplexes" en norme DVB-T permettant de transmettre simultanément une trentaine de programmes ou chaînes TV.

Selon un mode de réalisation particulier, le signal radar 28' est un multiplex tel que défini ci-dessus. Il comprend une pluralité de signaux de communication 10.0, 10.1, 10.2. Chacun de ces signaux est émis ou reçu à une fréquence distincte, désignée par f0, f1, f2 respectivement. Par exemple, les trois signaux 10.0, 10.1, 10.2. forment un multiplex portant trois chaînes de télévision. Ce multiplex est émis dans un même canal de transmission compris dans une bande de fréquences donnée.

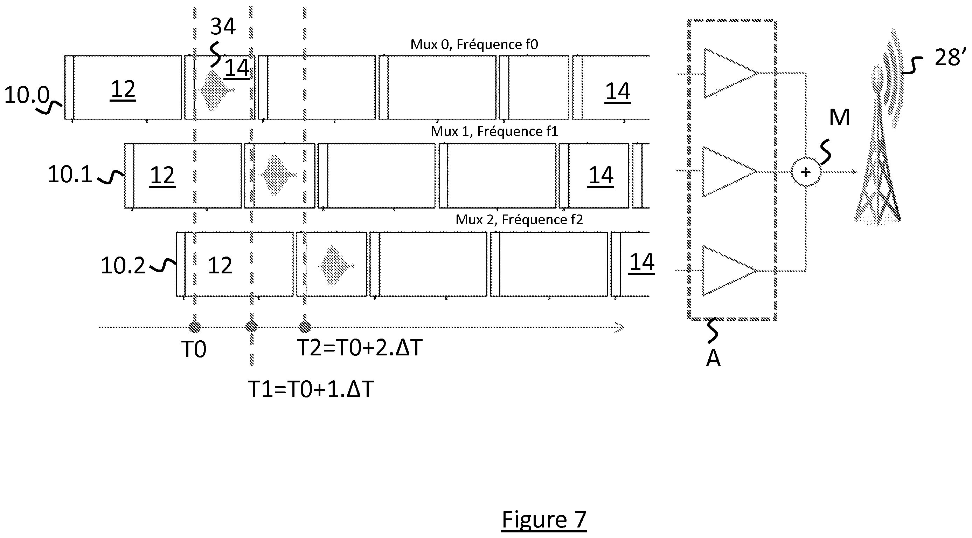

La **figure 7** illustre schématiquement l'insertion d'une impulsion radar 34 dans trois de signaux de communication destinés 10.0, 10.1, 10.2. à être multiplexés avant émission selon cet autre mode particulier de réalisation.

Comme décrit précédemment en référence à la figure 1, chaque signal de communication 10.0, 10.1, 10.2 comprend des trames allouées 12 à la communication et des trames non allouées 14 à la communication. Il s'agit d'insérer une impulsion radar dans ces trames non allouées 14.

Selon ce mode particulier de réalisation, l'impulsion radar 34, telle que décrite précédemment, est insérée de manière synchrone dans des trames non allouées 14 à la communication des signaux 10.0, 10.1, 10.2.

L'insertion synchrone signifie que l'impulsion radar est émise suivant une base de temps commune à chaque signal. Autrement dit, l'impulsion radar peut être insérée à des instants Tn définis de manière commune à chaque signal. Par exemple, on définit Tn=T0+n.ΔT, où n désigne un entier naturel pouvant être nul et ΔT désigne un intervalle de temps de référence prédéfini. Ainsi, l'insertion de l'impulsion radar 34 ne peut se faire ponctuellement qu'aux instants Tn prédéfinis.

De manière générale, l'impulsion radar 34 est insérée dans le n+1^{ème} signal 10.n, à l'instant Tn=T0+n.ΔT, dans une trame non allouée à la communication, par exemple dans une trame FEF 14 dans le cas où le signal est conforme au standard DVB-T2. Selon l'exemple illustré à la figure 7, l'impulsion radar 34 est insérée successivement aux instants T0= T0+ 0.ΔT, T1=T0+1.ΔT et T2=T0+2.ΔT respectivement dans les premier 10.0, deuxième 10.1 et troisième 10.2 signaux.

De manière générale, la fréquence fn du n+1^{ème} signal 10.n, dans lequel l'impulsion radar 34 est insérée est telle que fn=f0+n.Δf où n désigne un entier naturel et Δf désigne un intervalle de fréquence de référence.

Selon l'exemple illustré à la figure 7, les fréquences respectives des signaux 10.0, 10.1, 10.2 sont telles que f0=f0+ 0.Δf, f1= f0+ 1.Δf et f2= f0+ 2.Δf.

Ainsi, l'impulsion radar 34 est insérée dans chaque signal 10.0, 10.1, 10.2 avec un retard prédéfini qui est propre au signal considéré, respectivement 0, ΔT, 2ΔT par rapport à la référence temporelle commune T0.

Chaque signal 10.0, 10.1, 10.2 est destiné à être transmis à une fréquence f0, f1, f2 respectivement. L'ensemble de ces trois signaux est multiplexé de manière à former un multiplex destiné à être envoyé dans un même canal. Ce multiplex forme le signal radar 28'.

De manière générale, le signal radar 28' ainsi obtenu est un signal composite comprenant un ensemble de n impulsions radar réparties temporellement à travers n signaux 10.0 à 10.n-1 de fréquences distinctes au sein d'un même canal de transmission.

A chaque cycle d'émission, le signal radar 28' est vu comme un signal composite multi-fréquentiel comprenant une pluralité d'impulsions radar, chacune de ces
impulsions étant portée à une fréquence distincte et comprise dans la bande passante du canal de transmission.

Ce canal de transmission peut être préalablement identifié par la fréquence (f0 ; f1 ; f2) d'un canal porteur dans lequel l'impulsion radar est destinée à être émise. Cette fréquence est insérée dans l'instruction 58 d'émission décrite précédemment.

Il s'en suit que la puissance cumulée des impulsions radar par cycle d'émission est d'autant plus élevée que le nombre de signaux utilisés pour l'émission des impulsions radar est grand. Ceci permet avantageusement d'augmenter la distance de propagation du signal radar émis et d'accroître ainsi la portée du radar.

Un autre avantage que procure un tel signal radar composite est qu'il permet d'améliorer sensiblement la résolution de détection radar par rapport au cas où l'impulsion radar est insérée sur un signa mono-fréquentiel.

Dans le cas où un signal mono-fréquentiel est utilisé, la résolution radar Rs dépend de la durée τ de l'impulsion radar selon la formule suivante : Rs= c*τ/2 où c désigne la vitesse de la lumière dans le vide égale à 3.10⁸ m/s. Dans ce cas, l'amélioration de la résolution nécessite de réduire la durée des impulsions radar.

Dans le cas d'utilisation d'un signal composite selon l'invention tel que décrit ci-dessus, la résolution devient : Rs= c/(2.n.Δf) où n désigne le nombre de signaux de fréquence distincte, dans lesquels l'impulsion radar 34 a été insérée. Dans ce cas, la résolution ne dépend plus de la durée τ des impulsions radar mais du nombre de signaux utilisés (i.e. nombre de composantes fréquentielles constitutives du signal composite) et du pas fréquentiel Δf défini entre deux fréquences consécutives. Ainsi, la résolution peut être sensiblement améliorée en augmentant le nombre de canaux dans lesquels l'impulsion radar est insérée et/ou en augmentant le pas fréquentiel.

Par exemple, en considérant des impulsions de durée égale à 1 µs, la résolution radar est de 150 m dans le cas où l'impulsion radar est insérée à une seule fréquence (i.e. sur un signal mono-fréquentiel) tandis que cette résolution est avantageusement réduite à 4,6 m dans le cas d'un signal comprend 4 composantes fréquentielles, i.e. n=4. Ainsi, ce mode de réalisation a pour principal avantage d'améliorer sensiblement la résolution radar (i.e. minimiser le paramètre Rs) en contre-partie d'une puissance d'impulsion limitée et d'un temps de traitement plus conséquent.

Dès lors que l'impulsion radar 34 a été insérée dans des trames non allouées à la communication des différents signaux 10.0, 10.1, 10.2, ces derniers sont multiplexés, de manière à former le signal radar 28' avant qu'il soit émis.

Dans le présent exemple, les signaux sont multiplexés conformément à la norme DVB-T2, par exemple par un émetteur DVB-T2 comprenant des moyens de multiplexage conformes à la norme DVB-T2. De manière générale, on pourra considérer toute autre technique de multiplexage connue permettant de combiner différents signaux comprenant les impulsions radar dans le cadre de la présente invention en fonction de la norme utilisée.

Avant d'être multiplexés, tout ou partie des signaux de communication dans lesquels l'impulsion radar 34 a été insérée peut être amplifiée au moyen d'un étage d'amplification A comme illustré sur la figure 7. Par exemple, l'étage d'amplification comprend une pluralité d'amplificateurs radiofréquences.

L'émission coordonnée d'impulsions radar à une cadence prédéfinie Tn=T0+nΔT et à des fréquences prédéfinies fn=f0+nΔf comme décrit ci-avant selon un aspect de l'invention permet d'améliorer la résolution et la fonction d'ambiguïté du radar, où n désigne un nombre entier. Ceci est particulièrement avantageux pour séparer efficacement des cibles proches ou pour distinguer une cible parmi des parasites dus aux réflexions des ondes radar sur le sol ou sur des obstacles (e.g. relief ou bâtiments).

Selon une variante de réalisation non illustrée, l'impulsion radar 34 est insérée à un même instant Tm de référence dans une trame non allouée à la communication de tout ou partie des signaux de communication. Cette variante de réalisation peut être vue comme un cas particulier du mode de réalisation décrit ci-avant, où le retard ΔT est nul. Par exemple, Tn=T0+n.ΔT avec ΔT=0. Dans ce cas, on peut décider d'insérer au même instant T0 l'impulsion radar dans les trames non allouées à la communication des différents signaux. Cette opération pourra être réitérée à intervalles de temps réguliers, e.g. Tm=m.T0 où m est un entier naturel non nul.

Cette variante de réalisation permet avantageusement de maximiser la puissance du signal radar en émettant la même impulsion simultanément à différentes fréquences (i.e. dans différents signaux à des fréquences différentes au sein d'un même canal). Ceci a pour effet d'accroître la portée du radar.

En réception, le système de détection radar décrit ci-avant en référence à la figure 5 reste valable mais comprend en outre des moyens de démultiplexage (non représentés) pour démultiplexer le signal radar composite 28' reçu en sortie dudit au moins un récepteur 50. Les moyens de démultiplexage sont adaptés à démultiplexer le signal radar composite reçu en une pluralité de signaux de communication desquels est extraite l'impulsion radar 34 par lesdits moyens d'extraction 56. Ces moyens de démultiplexage peuvent être compris dans un détecteur conforme à la norme DVB-T2 ou ATSC 3.0, ou toute autre norme similaire.

## Revendications

1. Procédé (16) de génération d'un signal (28') radar, comprenant :
- une étape (18) d'acquisition d'une pluralité de n+1 signaux (10.0, 10.1, 10.2,..., 10n) de communication de fréquence f0 associée à un premier signal de communication et de fréquence fi telle que fi= f0+i.Δf associée au i^{ème} signal (10.i) de communication pour tout i ∈[1,n], où n désigne un entier naturel non nul et Δf désigne un intervalle de fréquence de référence, chaque signal de communication comprenant des trames (12) allouées à la communication et des trames (14) non allouées à la communication, ledit procédé étant **caractérisé en ce qu'**il comprend en outre :
- une étape (20) d'insertion d'une impulsion (34) radar dans au moins une trame (14) non allouée à la communication, dite trame radar, de chacun des signaux de ladite pluralité de n+1 signaux (10.0, 10.1, 10.2,...,10.n) de communication, de manière synchrone à savoir avec une base de temps commune pour chaque signal de communication, et
- une étape dans laquelle les n+1 signaux de communication (10.0, 10.1, 10.2, ..., 10n) dans lesquels ont été insérés une impulsion radar (34) à l'étape d'insertion (20) sont multiplexés de manière à former ledit signal radar (28').

2. Procédé de génération d'un signal radar selon la revendication 1, **caractérisé en ce que** ladite instruction (58) d'émission d'impulsion radar comprend une ou plusieurs des caractéristiques d'impulsion (34) radar suivantes :
- forme d'onde de l'impulsion (34) radar,
- occurrence et périodicité de l'impulsion (34) radar,
- durée de l'impulsion (34) radar,
- puissance de l'impulsion (34) radar,
- durée d'un silence suivant l'impulsion (34) radar.

3. Procédé de génération d'un signal radar selon l'une des revendications 1 ou 2, **caractérisé en ce qu'**il comprend une étape (64) d'ajout d'un en-tête (P1) dans au moins une trame radar du signal ( 28') radar, ledit en-tête comprenant une information sur la nature de l'impulsion (34) radar.

4. Procédé de génération d'un signal radar selon l'une des revendications 1 à 3, **caractérisé en ce que** chaque signal (10.0, 10.1, 10.2,..., 10n) de communication acquis à ladite étape (18) d'acquisition est un signal utilisant le protocole de communication selon le standard DVB-T2, et les trames (14) non allouées à la communication dudit signal (10.0, 10.1, 10.2,..., 10n) de communication sont des trames de type Future Extension Frame définies dans ledit standard.

5. Procédé de génération d'un signal radar selon l'une des revendications 1 à 3, **caractérisé en ce que** le dit au moins un signal (10 ; 10.0, 10.1, 10.2) de communication acquis à ladite étape (18) d'acquisition est un signal utilisant le protocole de communication selon le standard ATSC 3.0.

6. Procédé de génération d'un signal radar selon la revendication 1, **caractérisé en ce que** l'impulsion radar (24) est insérée pour un signal de communication donné (10.n) à un instant Tn=T0+n.ΔT où ΔT désigne un intervalle de temps de référence et T0 désigne un temps de référence commun (T0) à ladite pluralité de signaux.

7. Procédé de génération d'un signal radar selon la revendication 6, **caractérisé en ce que** l'intervalle de temps de référence ΔT est nul.

8. Procédé de détection radar, **caractérisé en ce qu'**il comprend :
- une étape (38) de génération d'un signal (28') radar suivant le procédé (16) de génération selon l'une des revendications 1 à 7,
- une étape (40) d'émission dudit signal (28') radar généré,
- une étape (42) de réception du signal (28') radar émis,
- une étape (44) d'extraction de l'impulsion (34) radar du signal (28') radar reçu.

9. Dispositif de génération d'un signal radar (28'), **caractérisé en ce qu'**il comprend :
- des moyens (24) d'acquisition d'une pluralité de n+1 signaux (10.0, 10.1, 10.2, ..., 10n) de communication de fréquence f0 associée à un premier signal de communication (10.0) et de fréquence fi telle que fi= f0+i.Δf associée au i^{ème} signal (10.n) de communication pour tout i ∈[1,n], où n désigne un entier naturel non nul et Δf désigne un intervalle de fréquence de référence, chaque signal de communication comprenant des trames (12) allouées à la communication et des trames (14) non allouées à la communication,
- des moyens (26) d'insertion adaptés à insérer une impulsion (34) radar dans au moins une trame (14) non allouée à la communication, dite trame radar, de chacun des signaux de communication de ladite pluralité de n+1 signaux (10.0, 10.1, 10.2,...,10.n) de communication, de manière synchrone à savoir avec une base de temps commune pour chaque signal de communication, et
- des moyens de multiplexage adaptés à multiplexer les n+1 signaux de communication (10.0, 10.1, 10.2, ..., 10n) dans lesquels ont été insérés une impulsion radar par lesdits moyens d'insertion (26), de manière à former le signal radar (28').

10. Système de détection radar, **caractérisé en ce qu'**il comprend
- au moins un dispositif (22) de génération d'un signal radar selon la revendication 9,
- au moins un émetteur (48a, 48b, 48c) adapté pour émettre ledit signal (28') radar généré par un dispositif de génération d'un signal radar,
- au moins un récepteur (50) adapté pour recevoir ledit signal (28') radar émis par un émetteur,
- des moyens (56) d'extraction de l'impulsion (34) radar du signal (28') radar reçu par un récepteur.

11. Système selon la revendication 9, **caractérisé en ce qu'**il comprend en outre des moyens de démultiplexage pour démultiplexer ledit signal radar (28') reçu en sortie dudit au moins un récepteur (50), en une pluralité de signaux de communication desquels est extraite l'impulsion radar (34) par lesdits moyens d'extraction (56).

## Patentansprüche

1. Verfahren (16) zur Erzeugung eines Radarsignals (28'), umfassend:
- einen Schritt (18) der Erfassung einer Vielzahl von n+1 Kommunikationssignalen (10.0, 10.1, 10.2,..., 10n) mit Frequenz f0, die einem ersten Kommunikationssignal zugeordnet ist, und mit Frequenz fi, sodass fi= f0+i.Δf dem i-ten Kommunikationssignal (10.i) für alle i ∈[1,n] zugeordnet ist, wobei n eine natürliche ganze Zahl ungleich Null bezeichnet und Δf ein Referenzfrequenzintervall bezeichnet, wobei jedes Kommunikationssignal Raster (12), die der Kommunikation zugewiesen sind, und Raster (14), die nicht der Kommunikation zugewiesen sind, umfasst, wobei das Verfahren **dadurch gekennzeichnet ist, dass** es weiter Folgendes umfasst:
- einen Schritt (20) der Einfügung eines Radarimpulses (34) in mindestens ein nicht der Kommunikation zugewiesenes Raster (14), als Radarraster bezeichnet, jedes der Signale der Vielzahl von n+1 Kommunikationssignalen (10.0, 10.1, 10.2,..., 10.n) auf synchrone Weise, das heißt, mit einer gemeinsamen Basiszeit für jedes Kommunikationssignal, und
- einen Schritt, bei dem die n+1 Kommunikationssignale (10.0, 10.1, 10.2, ..., 10n), in denen im Einfügungsschritt (20) ein Radarimpuls (34) eingefügt wurde, auf solche Weise gemultiplext werden, dass sie das Radarsignal (28') bilden.

2. Verfahren zur Erzeugung eines Radarsignals nach Anspruch 1, **dadurch gekennzeichnet, dass** die Anweisung (58) zum Aussenden eines Radarimpulses eine oder mehrere der folgenden Merkmale eines Radarimpulses (34) umfasst:
- Wellenform des Radarimpulses (34),
- Vorkommen und Periodizität des Radarimpulses (34),
- Dauer des Radarimpulses (34),
- Leistung des Radarimpulses (34),
- Dauer einer Stille im Anschluss an den Radarimpuls (34).

3. Verfahren zur Erzeugung eines Radarsignals nach einem der Ansprüche 1 oder 2, **dadurch gekennzeichnet, dass** es einen Schritt (64) der Hinzufügung einer Kopfzeile (P1) in mindestens ein Radarraster des Radarsignals (28') umfasst, wobei die Kopfzeile eine Information über die Art des Radarimpulses (34) umfasst.

4. Verfahren zur Erzeugung eines Radarsignals nach einem der Ansprüche 1 bis 3, **dadurch gekennzeichnet, dass** jedes im Erfassungsschritt (18) erfasste Kommunikationssignal (10.0, 10.1, 10.2,..., 10n) ein Signal ist, dass das Kommunikationsprotokoll gemäß dem Standard DVB-T2 verwendet, und die nicht der Kommunikation zugewiesenen Raster (14) des Kommunikationssignals (10.0, 10.1, 10.2,..., 10n) Raster vom Typ Future Extension Frame sind, die im Standard definiert sind.

5. Verfahren zur Erzeugung eines Radarsignals nach einem der Ansprüche 1 bis 3, **dadurch gekennzeichnet, dass** das im Erfassungsschritt (18) erfasste mindestens eine Kommunikationssignal (10; 10.0, 10.1, 10.2) ein Signal ist, das das Kommunikationsprotokoll gemäß dem Standard ATSC 3.0 verwendet.

6. Verfahren zur Erzeugung eines Radarsignals nach Anspruch 1, **dadurch gekennzeichnet, dass** der Radarimpuls (24) für ein vorgegebenes Kommunikationssignal (10.n) zu einem Zeitpunkt Tn=T0+n.ΔT eingefügt wird, wobei ΔT ein Referenzzeitintervall bezeichnet und T0 eine der Vielzahl von Signalen gemeinsame Referenzzeit (T0) bezeichnet.

7. Verfahren zur Erzeugung eines Radarsignals nach Anspruch 6, **dadurch gekennzeichnet, dass** das Referenzzeitintervall ΔT Null ist.

8. Verfahren zur Radarerkennung, **dadurch gekennzeichnet, dass** es Folgendes umfasst:
- einen Schritt (38) der Erzeugung eines Radarsignals (28') nach dem Erzeugungsverfahren (16) nach einem der Ansprüche 1 bis 7,
- einen Schritt (40) des Aussendens des erzeugten Radarsignals (28'),
- einen Schritt (42) des Empfangens des ausgesendeten Radarsignals (28'),
- einen Schritt (44) der Extraktion des Radarimpulses (34) aus dem empfangenen Radarsignal (28').

9. Vorrichtung zur Erzeugung eines Radarsignals (28'), **dadurch gekennzeichnet, dass** es Folgendes umfasst:
- Mittel (24) zur Erfassung einer Vielzahl von n+1 Kommunikationssignalen (10.0, 10.1, 10.2,..., 10n) mit Frequenz f0, die einem ersten Kommunikationssignal (10.0) zugeordnet ist, und mit Frequenz fi, sodass fi= f0+i.Δf dem i-ten Kommunikationssignal (10.n) für alle i ∈[1,n] zugeordnet ist, wobei n eine natürliche ganze Zahl ungleich Null bezeichnet und Δf ein Referenzfrequenzintervall bezeichnet, wobei jedes Kommunikationssignal Raster (12), die der Kommunikation zugewiesen sind, und Raster (14), die nicht der Kommunikation zugewiesen sind, umfasst,
- Einfügungsmittel (26), die angepasst sind zum Einfügen eines Radarimpulses (34) in mindestens ein nicht der Kommunikation zugewiesenes Raster (14), als Radarraster bezeichnet, jedes der Kommunikationssignale der Vielzahl von n+1 Kommunikationssignalen (10.0, 10.1, 10.2,..., 10.n) auf synchrone Weise, das heißt, mit einer gemeinsamen Basiszeit für jedes Kommunikationssignal, und
- Mittel zum Multiplexen, die angepasst sind zum Multiplexen der n+1 Kommunikationssignale (10.0, 10.1, 10.2, ..., 10n), in denen durch die Einfügungsmittel (26) ein Radarimpuls eingefügt wurde, auf solche Weise, dass sie das Radarsignal (28') bilden.

10. System zur Radarerkennung, **dadurch gekennzeichnet, dass** es Folgendes umfasst:
- mindestens eine Vorrichtung (22) zur Erzeugung eines Radarsignals nach Anspruch 9,
- mindestens einen Aussender (48a, 48b, 48c), der zum Aussenden des von der Vorrichtung zur Erzeugung eines Radarsignals erzeugten Radarsignals (28') angepasst ist,
- mindestens einen Empfänger (50), der zum Empfangen des von einem Aussender ausgesendeten Radarsignals (28') angepasst ist,
- Mittel (56) zur Extraktion des Radarimpulses (34) aus dem von einem Empfänger empfangenen Radarsignal (28').

11. System nach Anspruch 9, **dadurch gekennzeichnet, dass** es weiter Mittel zum Demultiplexen umfasst, um das am Ausgang des mindestens einen Empfängers (50) empfangene Radarsignal (28') in eine Vielzahl von Kommunikationssignalen zu demultiplexen, aus denen durch die Extraktionsmittel (56) das Radarimpuls (34) extrahiert wird.

## Claims

1. A method (16) for generating a radar signal (28'), comprising:
- a step (18) of acquiring a plurality of n+1 communication signals (10.0, 10.1, 10.2,.., 10n) of communication at frequency f0 associated with a first communication signal and at frequency fi such that fi=f0+i.Δf associated with the i^{th} signal (10.i) of communication for any i ∈[1,n], where n denotes a non-zero natural number and Δf denotes a reference frequency interval, each communication signal comprising frames (12) assigned to communication and frames (14) not assigned to communication, said method being **characterized in that** it further comprises:
- a step (20) of inserting a radar pulse (34) into at least one frame (14) not assigned to communication, referred to as a radar frame, of each of the signals of said plurality of n+1 communication signals (10.0, 10.1, 10.2, ...,10n), in a synchronous manner namely with a common time base for each communication signal, and
- a step in which the n+1 communication signals (10.0, 10.1, 10.2, ..., 10n) into which a radar pulse (34) has been inserted in the insertion step (20) are multiplexed so as to form said radar signal (28').

2. The method for generating a radar signal according to claim 1, **characterized in that** said radar pulse transmission instruction (58) comprises one or more of the following radar pulse (34) characteristics:
- waveform of the radar pulse (34),
- occurrence and periodicity of the radar pulse (34),
- duration of the radar pulse (34),
- power of the radar pulse (34),
- duration of a silence following the radar pulse (34).

3. The method for generating a radar signal according to one of claims 1 or 2, **characterized in that** it comprises a step (64) of adding a header (P1) to at least one radar frame of the radar signal (28'), said header comprising information regarding the nature of the radar pulse (34).

4. The method for generating a radar signal according to one of claims 1 to 3, **characterized in that** each communication signal (10.0, 10.1, 10.2, ...,10n) acquired in said acquisition step (18) is a signal using the communication protocol according to the DVB-T2 standard, and the frames (14) not assigned to communication of said signal (10.0, 10.1, 10.2,..., 10n) are Future Extension Frame-type frames defined in said standard.

5. The method for generating a radar signal according to one of claims 1 to 3, **characterized in that** said at least one communication signal (10; 10.0, 10.1, 10.2) acquired in said acquisition step (18) is a signal using the communication protocol according to the ATSC 3.0 standard.

6. The method for generating a radar signal according to claim 1, **characterized in that** the radar pulse (24) is inserted for a given communication signal (10.n) at a time Tn=T0+n.ΔT, where ΔT denotes a reference time interval and TO denotes a common reference time (T0) for said plurality of signals.

7. The method for generating a radar signal according to claim 6, **characterized in that** the reference time interval ΔT is zero.

8. A radar detection method, **characterized in that** it comprises:
- a step (38) of generating a radar signal (28') according to the generation method (16) of any one of claims 1 to 7,
- a step (40) of transmitting said generated radar signal (28'),
- a step (42) of receiving the transmitted radar signal (28'),
- a step (44) of extracting the radar pulse (34) from the received radar signal (28').

9. A device for generating a radar signal (28'), **characterized in that** it comprises:
- means (24) for acquiring a plurality of n+1 communication signals (10.0, 10.1, 10.2, ..., 10n) having a frequency f0 associated with a first communication signal (10.0) and a frequency fi such that fi = f0+i.Δf associated with the i^{th} communication signal (10.n) for any i ∈[1,n], where n denotes a non-zero natural number and Δf denotes a reference frequency interval, each communication signal comprising frames (12) assigned to communication and frames (14) not assigned to communication,
- insertion means (26) adapted to insert a radar pulse (34) into at least one frame (14) not assigned to communication, referred to as a radar frame, of each of the communication signals of said plurality of n+1 signals (10.0, 10.1, 10.2, ...,10.n), in a synchronous manner namely with a common time base for each communication signal, and
- multiplexing means adapted to multiplex the n+1 communication signals (10.0, 10.1, 10.2, ..., 10n) into which a radar pulse has been inserted by said insertion means (26), so as to form the radar signal (28').

10. The radar detection system, **characterized in that** it comprises
- at least one radar signal generation device (22) according to claim 9,
- at least one transmitter (48a, 48b, 48c) adapted to transmit said radar signal (28') generated by a radar signal generation device,
- at least one receiver (50) adapted to receive said radar signal (28') transmitted by a transmitter,
- means (56) for extracting the radar pulse (34) from the radar signal (28') received by a receiver.

11. The system according to claim 9, **characterized in that** it further comprises demultiplexing means for demultiplexing said radar signal (28') received at the output of said at least one receiver (50) into a plurality of communication signals from which the radar pulse (34) is extracted by said extraction means (56).
